# EUROPEAN PATENT SPECIFICATION

(11) **EP 1 374 612 B1**
(45) Date of publication and mention of the grant of the patent: **07.09.2016**
(21) Application number: 02723650.4
(22) Date of filing: 29.03.2002
(51) Int. Cl.: H04W 52/02, H04W 48/12

(54) **A METHOD AND SYSTEM FOR MAXIMIZING STANDBY TIME IN MONITORING A CONTROL CHANNEL**
VERFAHREN UND SYSTEM ZUR MAXIMIERUNG DER STANDBY-ZEIT BEIM ÜBERWACHEN EINES KONTROLLKANALS
PROCEDE ET SYSTEME D'OPTIMISATION DU TEMPS D'ATTENTE LORS DE LA SURVEILLANCE D'UNE VOIE DE SIGNALISATION

(30) Priority: 30.03.2001 US 822978
(43) Date of publication of application: 02.01.2004
(73) Proprietor: QUALCOMM INCORPORATED, San Diego, CA 92121-1714 (US)
(72) Inventor: BENDER, Paul, E., San Diego, CA 92122 (US); REZAIIFAR, Ramin, San Diego, CA 92131 (US)
(74) Representative: Wagner, Karl H.
(86) International application number: PCT/US2002/009628
(87) International publication number: WO 2002/080600

(56) References cited:
- EP-A- 0 939 569
- EP-A- 0 961 513
- WO-A-94/08432
- 3GPP2 C: "cdma2000 High Rate Packet Data Air Interface Specification C.S0024" [Online] 12 September 2000 (2000-09-12) , 3GPP2 XP002206456 Retrieved from the Internet: <URL: www.3gpp2.org> [retrieved on 2002-07-15] page 6-18 -page 6-24 page 6-66 -page 6-71 page 8-6 -page 8-8

## Description

### BACKGROUND

### 1. Field

The present invention relates generally to communications, and more specifically to maximizing standby time while monitoring a control channel.

### 2. Background

In telecommunication systems such as the IS-95 family of CDMA wireless telecommunication systems, there may be several types of coded channels originating from a base station or a cell cite, as well as several types of coded channels originating from a mobile station or the subscriber unit. These channels may include channels that carry the necessary control data and signals as well as channels that may carry voice, data, and some control data.

A control channel may transmit messages and parameters that a mobile station may need for access and paging operations. The messages and parameters may convey system parameters, access parameters, neighbor lists, mobile-directed paging messages, mobile-directed orders, and channel assignment information to a mobile station. A control channel may be used to communicate with a mobile station when there is no call in progress, i.e., in an idle state for the mobile station.

In the idle state, a mobile station may monitor the mobile-directed messages and parameters transmitted from a base station on the forward link. The mobile station may use a sleep or standby mode when monitoring a control channel. During a sleep or standby mode, the mobile station may go to sleep, i.e., shut down unnecessary functions, and wake up on a periodic basis to monitor the control channel.

Paging schemes disclosed in U.S. Patent No. 6,111,865, entitled "DUAL CHANNEL SLOTTED PAGING", and in U.S. Patent No. 6,687,285, entitled "METHOD AND APPARATUS FOR SUPERVISING THE PERFORMANCE OF A QUICK PAGING CHANNEL IN A DUAL EVENT SLOTTED PAGING SYSTEM", illustrate the basic implementation of a full paging channel in combination with a quick paging channel.

A base station may insert the control channel information into assigned control time slots, which the mobile station knows to monitor. A mobile station may monitor the forward link in non-slotted mode or in slotted mode. In non-slotted mode, the mobile station may monitor the forward link continuously. In slotted mode, the mobile station may monitor a control channel only during assigned control channel cycles. In the latter case, because the mobile station does not have to monitor all the slots all the time, the mobile station operating in slotted mode may conserve some battery power. A slotted mode control channel is described in more detail in U.S. Patent No. 5,509,015, entitled "METHOD AND APPARATUS FOR SCHEDULING COMMUNICATION BETWEEN TRANSCEIVERS," and U.S. Patent No.6,421,540, entitled "A METHOD AND APPARATUS FOR MAXIMIZING STANDBY TIME USING A QUICK PAGING CHANNEL,".

In the interest of conserving battery power, it would be desirable to maximize the time that the mobile station may be in sleep mode. There is therefore a need in the art for a system and a method for an efficient monitoring of a control channel that increases the amount of time a mobile station may remain in standby or sleep mode while ensuring that the mobile station promptly receives all messages and parameters transmitted on a control channel.

### SUMMARY

According to one aspect of the present invention, a method for monitoring a control channel in a telecommunication system includes transmitting, at an access network, a packet directed to an access terminal during a first time period; transmitting a message during the first time period; and transmitting a set of overhead parameters during a second time period. The method further includes monitoring, at the access terminal, the control channel based on a relationship between a current and a previous message.

According to another aspect of the present invention, a method for monitoring a control channel in a telecommunication system includes receiving, at an access terminal, a packet directed to the access terminal and a message during a first time interval. The method further includes monitoring the control channel to receive a set of overhead parameters, which is transmitted during a second time period, based on a relationship between a current message and a previous message.

According to another aspect of the present invention, a method for transmitting control channel information in a telecommunication system includes transmitting a packet directed to an access terminal during a first time period; transmitting a message during the first time period; and transmitting a set of overhead parameters during a second time period.

In the above aspects, the message and the set of overhead parameters may be linked to each other. Furthermore, the access terminal may need to monitor the control channel only during the first time period if a current message indicates that the set of received overhead parameters is up to date. In this case, the access terminal may enter a sleep mode at the end of the first time interval. Otherwise, the access terminal may continue to monitor the control channel until the access terminal receives an up-to-date set of overhead parameters.

### BRIEF DESCRIPTION OF THE DRAWINGS

The features, nature, and advantages of the present invention will become more apparent from the detailed description set forth below when taken in conjunction with the drawings in which like reference characters identify correspondingly throughout and wherein:
FIG. 1 is a diagram of a wireless communication system that supports a number of users;
FIG. 2 is a simplified block diagram of an embodiment of a base station and a mobile station;
FIG. 3 is a representation of the protocols for an air interface;
FIG. 4 is a representation of the protocols for a connection layer;
FIG. 5 and FIG. 6 are representations of state diagrams for an idle state protocol;
FIG. 7 is a representation of a MAC layer packet and capsule;
FIG. 8 is a representation of a forward link channel;
FIG. 9 is a representation of a reverse link channel;
FIG. 10 is a representation of a forward link slot structure;
FIG. 11 and FIG. 12 are representations of periodic monitoring schemes for a control channel; and
FIG. 13 is a flow chart for a periodic monitoring scheme for a control channel.

### DETAILED DESCRIPTION

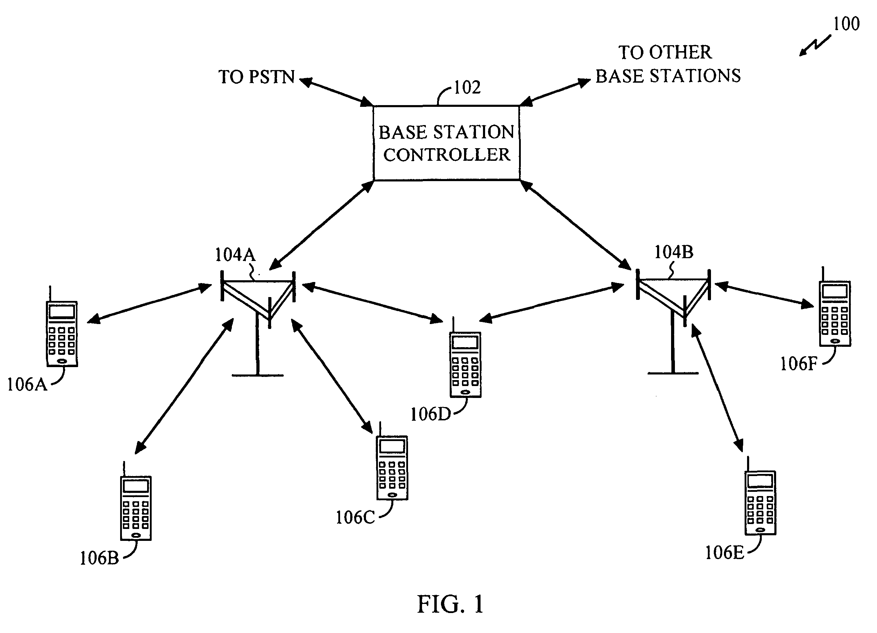

FIG. 1 is a diagram of a wireless communication system 100 that supports a number of users and is capable of implementing various aspects of the invention. System 100 provides communication for a number of cells, with each cell being serviced by a corresponding base station 104. The base stations are also commonly referred to as Base Transceiver Systems (BTSs). Various mobile stations or remote terminals 106 are dispersed throughout the system. Each mobile station 106 may communicate with one or more base stations 104 on the forward and reverse links at any particular moment, depending on whether or not the mobile station is active and whether or not it is in soft handoff. The forward link refers to transmission from base station 104 to mobile station 106, and the reverse link refers to transmission from mobile station 106 to base station 104. As shown in FIG. 1, base station 104A communicates with mobile stations 106A, 106B, 106C, and 106D, and base station 104B communicates with mobile stations 106D, 106E, and 10F. Mobile station 106D is in soft handoff and concurrently communicates with base stations 104A and 104B.

In system 100, a Base Station Controller (BSC) 102 couples to base stations 104 and may further couple to a Public Switched Telephone Network (PSTN). The coupling to the PSTN may be achieved via a Mobile Switching Center (MSC), which is not shown in FIG. 1 for simplicity. A BSC may also couple into a packet network, which is typically achieved via a Packet Data Serving Node (PDSN) that is also not shown in FIG. 1. BSC 102 provides coordination and control for the base stations coupled to it. BSC 102 further controls the routing of telephone calls among mobile stations 106, and among mobile stations 106 and users coupled to the PSTN (e.g., conventional telephones) and to the packet network, via base stations 104.

System 100 may be designed to support one or more CDMA standards such as: (1) the "TIA/EIA-95-B Mobile Station-Base Station Compatibility Standard for Dual-Mode Wideband Spread Spectrum Cellular System" (the IS-95 standard); (2) the documents offered by a consortium named "3rd Generation Partnership Project" (3GPP) and embodied in a set of documents including Document Nos. 3G TS 25.211, 3G TS 25.212, 3G TS 25.213, and 3G TS 25.214 (the W-CDMA standard); and (3) the documents offered by a consortium named "3rd Generation Partnership Project 2" (3GPP2) and embodied in a set of documents including Document Nos. C.S0002-A, C.S0005-A, C.S0010-A, C.S0011-A. C.S0024. and C.S0026 (the cdma2000 standard). In the case of the 3GPP and 3GPP2 documents, these are converted by standards bodies worldwide (e.g., TIA, ETSI, ARIB, TTA, and CWTS) into regional standards and have been converted into international standards by the International Telecommunications Union (ITU).

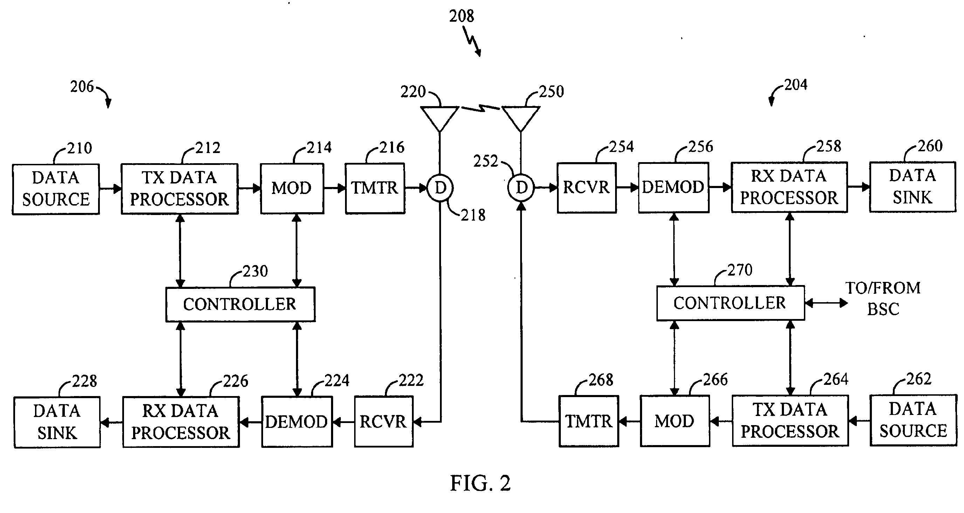

FIG. 2 is a simplified block diagram of an embodiment of base station 204 and mobile station 206, which are capable of implementing various aspects of the invention. For a particular communication, voice data, packet data, and/or messages may be exchanged between base station 204 and mobile station 206, via an air interface 208. Various types of messages may be transmitted, such as messages used to establish a communication session between the base station and mobile station and messages used to control a data transmission (e.g., power control, data rate information, acknowledgment, and so on). Some of these message types are described in further detail below.

For the reverse link, at mobile station 206, voice and/or packet data (e.g., from a data source 210) and messages (e.g., from a controller 230) are provided to a transmitting (TX) data processor 212, which formats and encodes the data and messages with one or more coding schemes to generate coded data. Each coding scheme may include any combination of Cyclic Redundancy Check (CRC), convolutional, turbo, block, and other coding, or no coding at all. The voice data, packet data, and messages may be coded using different schemes, and different types of messages may be coded differently.

The coded data is then provided to a modulator (MOD) 214 and further processed (e.g., covered, spread with short PN sequences, and scrambled with a long PN sequence assigned to the mobile station). The modulated data is then provided to a transmitter unit "TMTR" 216 and conditioned (e.g., converted to one or more analog signals, amplified, filtered, and quadrature modulated) to generate a reverse link signal. The reverse link signal is routed through a duplexer (D) 218 and transmitted via an antenna 220 to base station 204.

At base station 204, the reverse link signal is received by an antenna 250, routed through a duplexer 252, and provided to a receiver unit "RCVR" 254. Receiver unit 254 conditions (e.g., filters, amplifies, down converts, and digitizes) the received signal and provides samples. A demodulator "DEMOD" 256 receives and processes (e.g., despreads, decovers, and pilot demodulates) the samples to provide recovered symbols. Demodulator 256 may implement a rake receiver that processes multiple instances of the received signal and generates combined symbols. A receiving (RX) data processor 258 then decodes the symbols to recover the data and messages transmitted on the reverse link. The recovered voice/packet data is provided to a data sink 260 and the recovered messages may be provided to a controller 270. The processing by demodulator 256 and RX data processor 258 are complementary to that performed at remote terminal 206. Demodulator 256 and RX data processor 258 may further be operated to process multiple transmissions received via multiple channels, e.g., a Reverse Fundamental Channel (R-FCH) and a Reverse Supplemental Channel (R-SCH). Also, transmissions may be simultaneously from multiple remote terminals, each of which may be transmitting on a reverse fundamental channel, a reverse supplemental channel, or both.

On the forward link, at base station 204, voice and/or packet data (e.g., from a data source 262) and messages (e.g., from controller 270) are processed (e.g., formatted and encoded) by a transmitting (TX) data processor 264, further processed (e.g., covered and spread) by a modulator (MOD) 266, and conditioned (e.g., converted to analog signals, amplified, filtered, and quadrature modulated) by a transmitter unit "TMTR" 268 to generate a forward link signal. The forward link signal is routed through duplexer (D) 252 and transmitted via antenna 250 to mobile station 206.

At mobile station 206, the forward link signal is received by antenna 220, routed through duplexer (D) 218, and provided to a receiver unit "RCVR" 222. Receiver unit 222 conditions (e.g., down converts, filters, amplifies, quadrature modulates, and digitizes) the received signal and provides samples. The samples are processed (e.g., despreaded, decovered, and pilot demodulated) by a demodulator (DEMOD) 224 to provide symbols, and the symbols are further processed (e.g., decoded and checked) by a receiving (RX) data processor 226 to recover the data and messages transmitted on the forward link. The recovered data is provided to a data sink 228, and the recovered messages may be provided to controller 230.

### Architecture Reference Model:

The system presented in FIG. 2 may be considered as an architecture reference model, including a base station 204 (hereinafter "access network"), a mobile station 206 (hereinafter "access terminal"), and an air interface 208 between the access network and the access terminal. Generally, an Access Network (AN) may include network equipment providing data connectivity between a packet switched data network, such as the Internet, and an Access Terminal (AT). An AT may include a device providing data connectivity to a user. An AT may be connected to a computing device such as a laptop personal computer or it may be a self-contained data device such as a Personal Digital Assistant (PDA). An AT may be mobile or stationary, and may communicate with one or more base stations. An AT may transmit and receive data packets through one or more modem pool transceivers to a base station modem pool controller. Modem pool transceivers and modem pool controllers may be parts of an access network. An AT may be any data device that communicates through a wireless channel or through a wired channel, for example using fiber optic or coaxial cables. An AT may further be any one of devices including but not limited to PC card, compact flash, external or internal modem, or wireless or wireline phone. The communication link through which the access terminal sends signals to the modem pool transceiver is called a reverse link. The communication link through which modems pool transceiver sends signals to an access terminal is called a forward link.

### Protocol Architecture:

The air interface 208 (FIG. 2) may be layered, with interfaces defined for each layer and for each protocol within each layer; therefore, providing scalability for the layers and protocols. Table 1 shows a layering architecture for the air interface 208. Each layer may include one or more protocols that perform the layer's functionality.

**Table 1. Air Interface Layering Architecture**

| |
|---|
| Application Layer |
| Stream Layer |
| Session Layer |
| Connection Layer |
| Security Layer |
| MAC Layer |
| Physical Layer |

The protocols within each layer may use signaling messages or headers to convey information to their peer entity at the other side of the air-link. When protocols send messages, they may use the Signaling Network Protocol (SNP) to transmit these messages.

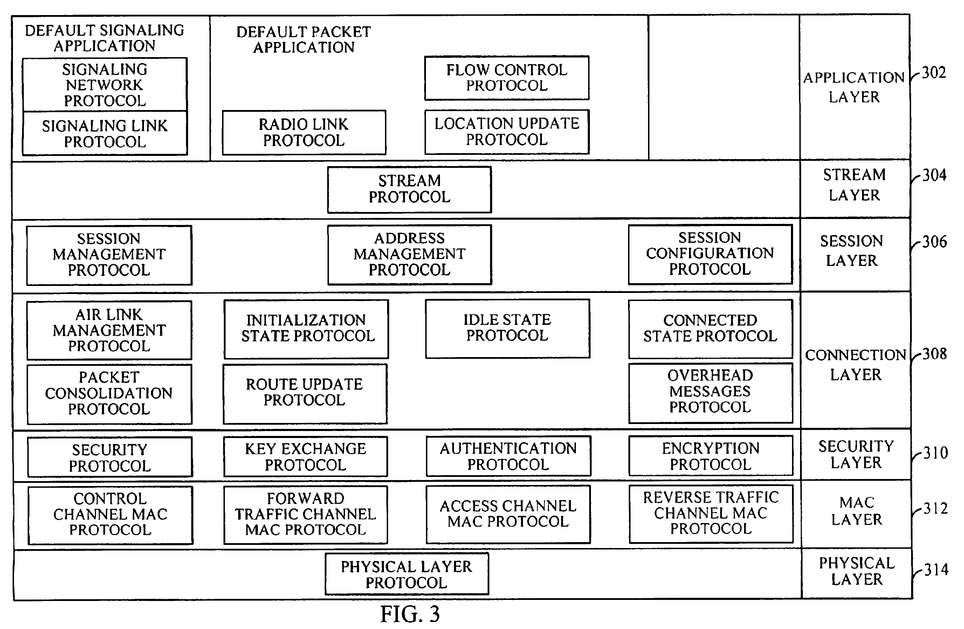

FIG. 3 presents the protocols defined for each layer shown in Table 1, according to one embodiment of the invention. A brief description of these protocols is provided below.

Application Layer 302 that may include the following protocols:
Signaling Network Protocol (SNP) that may provide message transmission services for signaling messages;
Signaling Link Protocol (SLP) that may provide fragmentation mechanisms, along with reliable and best-effort delivery mechanisms for signaling messages and, when used in the context of the default signaling application, SLP may carry SNP packets;
Radio Link Protocol (RLP) that may provide retransmission and duplicate detection for a data stream;
Location Update Protocol that may define location-update procedures and messages in support of mobility management for the default packet application; and
Flow Control Protocol that may define flow control procedures for enabling and disabling the packet application data flow.

Stream Layer 304 that may add a stream header in the transmit direction, remove the stream header, and forward packets to the correct application on the receiving entity.

Session Layer 306 that may include the following protocols:
Session Management Protocol that may provide means to control the activation and the deactivation of the address management protocol and the session configuration protocol as well as a session keep-alive mechanism;
Address Management Protocol that may provide Access Terminal Identifier (ATI) management; and
Session Configuration Protocol that may provide negotiation and configuration of the protocols used in a session.

Connection Layer 308 that may control the state of the air interface, and may prioritize the traffic that is sent over it. The connection may be either closed or open:
Closed Connection: When a connection is closed, the access terminal may not be assigned a dedicated air-link resource. Communications between the access terminal and the access network may be conducted over the access channel and the control channel.

Open Connection: When a connection is open, the access terminal may be assigned the forward traffic channel, a reverse power control channel, and a reverse traffic channel. Communications between the access terminal and the access network may be conducted over these assigned channels, as well as over the control channel.

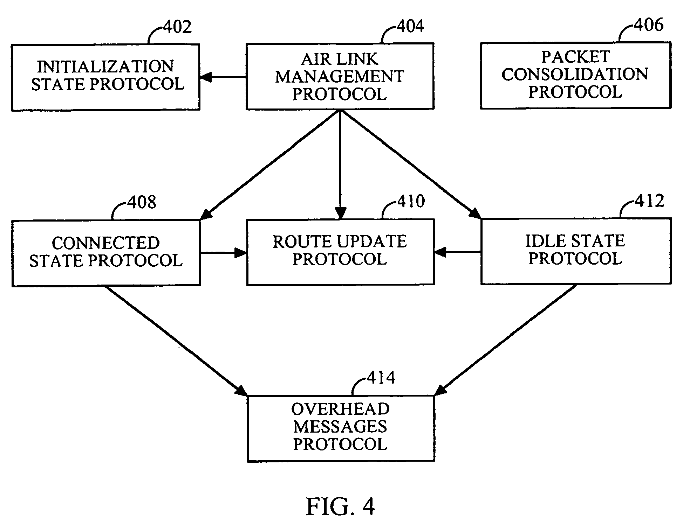

The connection layer may be organized as shown in FIG. 4 in accordance with one embodiment:
Initialization State Protocol 402: This protocol may perform the actions associated with acquiring an access network.

Air Link Management Protocol 404: This protocol may maintain the overall connection state in the access terminal and the access network. The protocol may be in one of three states, corresponding to whether the access terminal has yet to acquire the network (INITIALIZATION STATE), has acquired the network but the connection is closed (IDLE STATE), or has an open connection with the access network (CONNECTED STATE). This protocol may activate one of the following three protocols as a function of its current state.

Packet Consolidation Protocol 406: This protocol may consolidate and prioritize packets for transmission as a function of their assigned priority and the target transmission channel.

Connected State Protocol 408: This protocol may perform the actions associated with an access terminal that has an open connection, and may manage the radio link between the access terminal and the access network.

Route Update Protocol 410: This protocol may perform the actions associated with keeping track of an access terminal's location and maintaining the radio link between the access terminal and the access network. This protocol may also perform supervision on the pilots.

Idle State Protocol 412: This protocol may perform the actions associated with an access terminal that has acquired the network, but does not have an open connection, including keeping track of the access terminal's approximate location in support of efficient paging, opening of a connection, and supporting access terminal power conservation.

Overhead Messages Protocol 414: This protocol may broadcast essential parameters over the control channel. These parameters are shared by protocols in the connection layer as well as protocols in other layers. This protocol also performs supervision on the messages necessary to keep the connection layer functioning.

The air link management protocol, its descendants, and the overhead message protocol are control protocols. The packet consolidation protocol operates on transmitted and received data.

Security Layer 310 that may include the following protocols:
Key Exchange Protocol that may provide the procedures followed by the access network and the access terminal to exchange security keys for authentication and encryption;
Authentication Protocol that may provide the procedures followed by the access network and the access terminal for authenticating traffic;
Encryption Protocol that may provide the procedures followed by the access network and the access terminal for encrypting traffic; and
Security Protocol that may provide procedures for generation of codes that can be used by the authentication protocol and encryption protocol.

MAC Layer 312 that may include the following protocols:
Control Channel Medium Access Control (MAC) Protocol that may provide the procedures followed by the access network to transmit, and by the access terminal to receive the control channel;
Access Channel MAC Protocol that may provide the procedures followed by the access terminal to transmit, and by the access network to receive the access channel;
Forward Traffic Channel MAC Protocol that may provide the procedures followed by the access network to transmit, and by the access terminal to receive the forward traffic channel; and
Reverse Traffic Channel MAC Protocol that may provide the procedures followed by the access terminal to transmit, and by the access network to receive the reverse traffic channel.

Physical Layer 314 that may provide channels structure, frequency, and power output and modulation specifications for the forward and reverse links.

### IDLE STATE PROTOCOL:

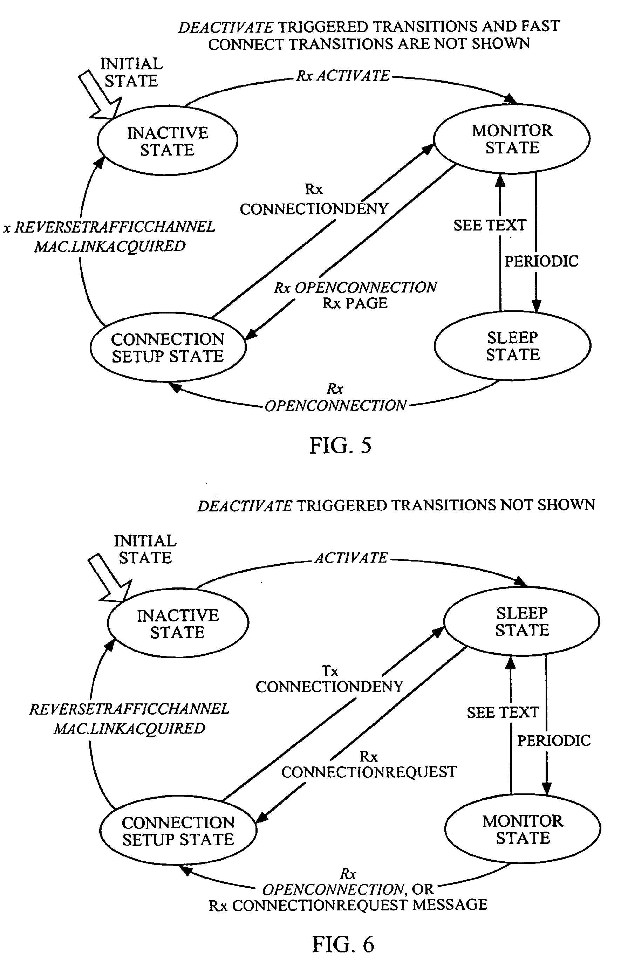

The idle state protocol 412 may provide the procedures and messages used by the access terminal and the access network when the access terminal has acquired a network and a connection is not open. This protocol may operate in one of the following four states, as shown in FIG. 5, which illustrates state transitions for an access terminal; and FIG. 6, which illustrates state transitions for an access network.
Inactive State: In this state the protocol waits for an activation command.
Sleep State: In this state the access terminal may shut down part of its subsystems to conserve power. The access terminal may not monitor the forward channel, and the access network may not transmit unicast packets, which are directed to the access terminal.
Monitor State: In this state the access terminal monitors the control channel, listens for page messages; and, if necessary, updates the parameters received from the overhead messages protocol. The access network may transmit unicast packets to the access terminal in this state.
Connection Setup State: In this state the access terminal and the access network may set-up a connection.

The idle state protocol 412 (FIG. 4) may support periodic network monitoring of a control channel by the access terminal, allowing for significant power savings, under the following exemplary access terminal operation modes:

Continuous operation, in which the access terminal continuously monitors the control channel.

Suspended mode operation, in which the access terminal monitors the control channel continuously for a period of time and then proceeds to operate in the slotted mode. Suspended mode follows air-link management protocol operations and allows quick network-initiated reconnection.

Slotted mode operation, in which the access terminal monitors a selected set of slots.

### SLEEP STATE:

When an access terminal is in the sleep state it may stop monitoring the control channel. In this state, the access terminal may shut down processing some resources to reduce power consumption. If the access terminal requires opening a connection, it shall transition to the connection setup state. When the access network is in the sleep state, it may be prohibited from sending unicast packets to the access terminal. The access network and the access terminal shall transition from the sleep state to the monitor state in time to send and receive, respectively, the synchronous capsules sent in each control channel cycle.

### MONITOR STATE:

When the access terminal is in the monitor state, it may monitor the control channel. When the access network is in the monitor state, it may send unicast packets to the access terminal. The access terminal, when in the monitor state, may select the CDMA channel, and monitor the overhead messages as will be specified in the overhead messages protocol section.

An access terminal in the monitor state may transition to the sleep state if the following requirements are met:

The access terminal has received an acknowledgement to every access probe that it has sent since entering the monitor state; and

The access terminal has received an "Access Channel MAC.Tx Ended" indication for every "Access Channel MAC.Tx Started" indication it has received since entering the monitor state; and

The access terminal has not advertised a suspend period that is current. A suspend period is current if the time advertised in the associated Connection Close message is greater than the current system time.

### OVERHEAD MESSAGES PROTOCOL:

The quick configuration message and the sector parameter message are collectively termed the overhead messages. The access network may broadcast these messages over the control channel. These messages may pertain to multiple protocols and, therefore, may be specified separately. The overhead message protocol may provide procedures related to the transmission, reception, and supervision of these messages. This protocol may be in one of two states:
Inactive State: In this state, the protocol waits for an activation command. This state corresponds only to the access terminal and occurs when the access terminal has not acquired an access network or is not required to receive overhead messages.
Active State: In this state, the access network transmits and the access terminal receives overhead messages.

The access network may include a Quick Configuration Message (QCM) in every Synchronous Capsule (SC) that the access network may transmit in a Control Channel Cycle (CCC). The access network may also include a sector parameter message in a SC at least once every specified number of CCCs. The access network may set the overhead signature field of a QCM to the overhead signature field of the next sector parameter message. When the access terminal is required to keep the overhead messages updated, it may perform supervision on the QCM and the sector parameter message, as discussed below.

When the access terminal receives a QCM, it may determine an overhead signature therefrom. If the value of the overhead signature field of the received QCM is different from a stored value for overhead signature, the access terminal may monitor the subsequent SCs until the access terminal receives an up-to-date sector parameter message. Otherwise, the access terminal may transition to sleep state.

Once the access terminal receives an up-to-date sector parameter message, it may store the overhead signature associated with the message for future comparisons. The access terminal may cache overhead message parameters and signatures to speed up acquisition of parameters from a previously monitored sector.

### QUICK CONFIGURATION MESSAGE:

A quick configuration message (QCM) may be used to indicate a change in an overhead message content and other frequently changing information. A QCM may include fields, such as an overhead signature field. The access network may set this field to the value of the overhead signature field of the next sector parameter message it will transmit.

### SECTOR PARAMETERS MESSAGE:

The sector parameters message may be used to convey sector specific information to an access terminal. The sector parameters may include fields, such as an overhead signature field. The access network may change this field if the content of a sector parameters message changes.

### MAC LAYER:

The MAC Layer 312 (FIG.3) may include the rules governing operation of the control channel, access channel, forward traffic channel, and reverse traffic channel, as described below:
Control Channel MAC Protocol: This protocol may build control channel MAC layer packets out of one or more security layer packets. This protocol may contain the rules concerning access network transmission and packet scheduling on the control channel, terminal acquisition of the control channel, and control channel MAC layer packet reception. This protocol may also add the access terminal address to transmitted packets.
Access Channel MAC Protocol: This protocol may include the rules governing transmission timing and power characteristics for the access channel.
Forward Traffic Channel MAC Protocol: This protocol may include the rules governing operation of the forward traffic channel. This protocol may contain the rules the access terminal follows when transmitting the data rate control channel, along with the rules the access network uses to interpret this channel. The protocol may support both variable rate and fixed rate operation of the forward traffic channel.
Reverse Traffic Channel MAC Protocol: This protocol may include the rules governing operation of the reverse traffic channel. This protocol may contain the rules the access terminal follows to assist the access network in acquiring the reverse traffic channel. This protocol may also contain the rules the access terminal and the access network may follow to select a transmission rate for the reverse traffic channel.

In the transmitting direction, the MAC layer may receive security layer packets; add layer-related headers, trailer, and the padding, and forward the resulting packet for transmission to the physical layer. In the receiving direction, the MAC layer may receive the MAC packets from the physical layer and forward them to the security layer after removing the layer-related header, trailer, and padding.

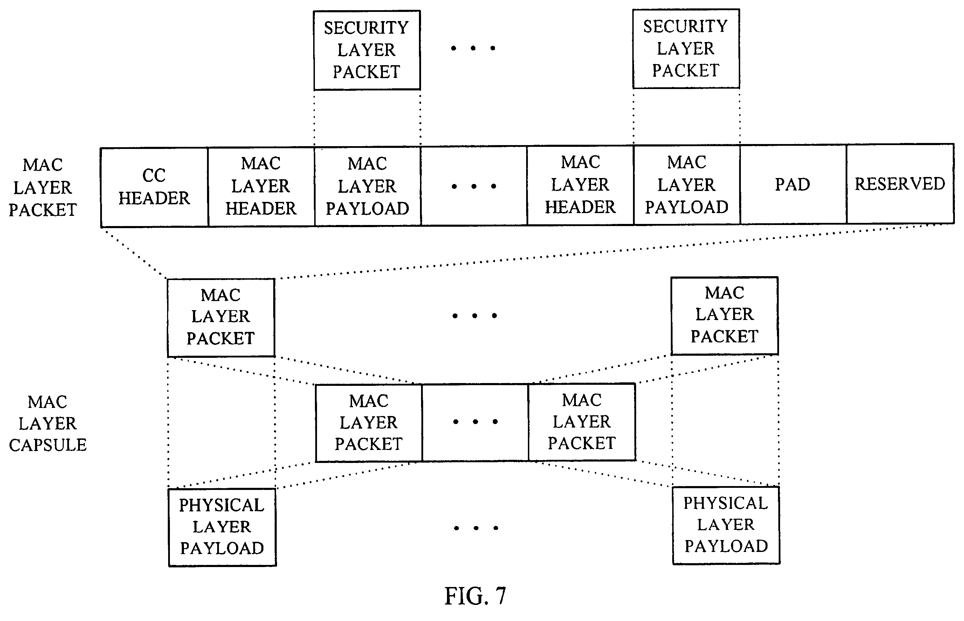

FIG. 7 shows a relationship between security layer packets, MAC packets, and physical layer packets for the control channel, access channel, and the forward and reverse traffic channels.

### CONTROL CHANNEL MAC PROTOCOL:

The control channel MAC protocol may provide the procedures and messages required for an access network to transmit and for an access terminal to receive the control channel. The access network may have one instance of this protocol for all access terminals. This protocol may be in one of two states:
Inactive State: In this state, the protocol waits for an activation command. This state corresponds only to the access terminal and occurs when the access terminal has not acquired an access network or is not monitoring the control channel.
Active State: In this state, the access network transmits and the access terminal receives the control channel.

The transmission unit of this protocol may be a control channel MAC layer packet, as shown below, for example:

| | | | | | | |
|---|---|---|---|---|---|---|
| 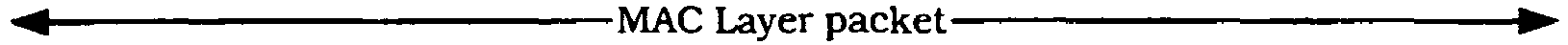 | | | | | | |
| CC header | MAC Layer header | Security Layer packet | MAC Layer header | Security Layer packet | pad | reserved |

The control channel MAC protocol may send the MAC layer packets for transmission to the physical layer. The control channel MAC layer packets may be transmitted, either in a synchronous capsule, which is transmitted at a particular time, or in an asynchronous capsule, which may be transmitted at any time except when a synchronous capsule is transmitted. A synchronous capsule may include one or more control channel MAC layer packets. An asynchronous capsule may include one control channel MAC layer packet.

### CONTROL CHANNEL CYCLE:

The CCC may be defined, for example, as a 256-slot period, which may be synchronous with a system time, i.e., there may be an integer multiple of 256 slots between the beginning of a CCC and the beginning of a system time.

An access network may have one instance of the control channel MAC protocol operating per sector. The access network may construct a SC out of the pending security layer packets that are destined for transmission in a SC.

### PHYSICAL LAYER CHANNELS:

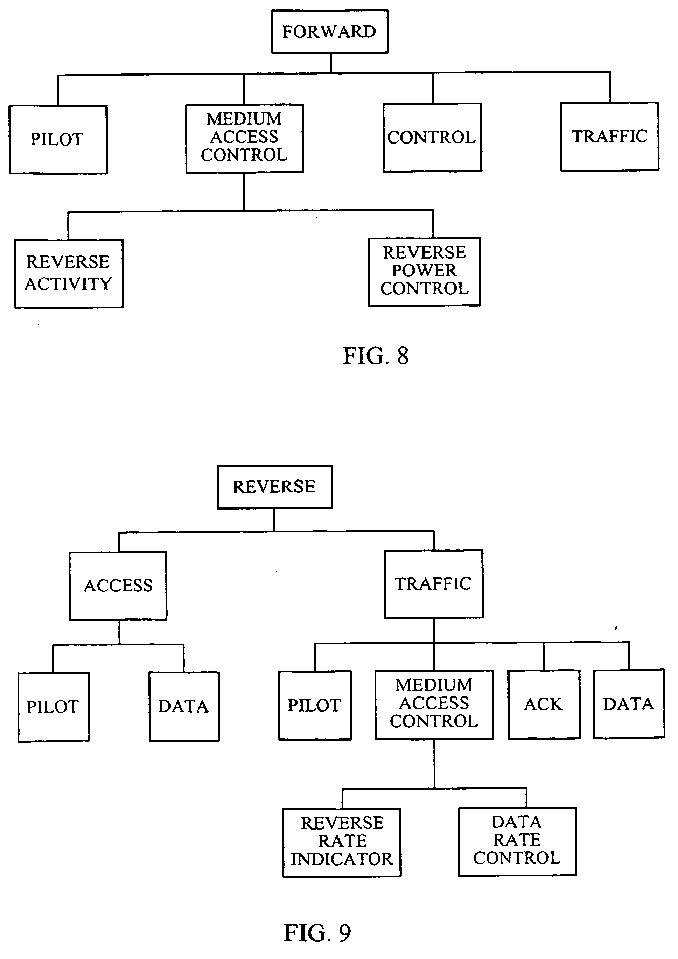

The physical layers 414 (FIG. 3) may define the physical layer channels and the forward and reverse channel hierarchies shown in FIG. 8 and FIG. 9.

The forward channel may include the following time-multiplexed channels: the pilot channel, the forward medium access control (MAC) channel, the forward traffic channel, and the control channel. The traffic channel may carry physical layer packets of user data. The control channel may carry control messages, and it may also carry user traffic. Each channel may be further decomposed into code-division-multiplexed quadrature Walsh channels.

The forward link may consist of slots, each having a length of exemplary 2048 chips. Groups of 16 slots may be aligned to the PN rolls of the zero-offset PN sequences and may align to a system time on even-second ticks. Within each slot, the pilot, MAC, traffic, or control channels may be time-division multiplexed, and may be transmitted at the same power level.

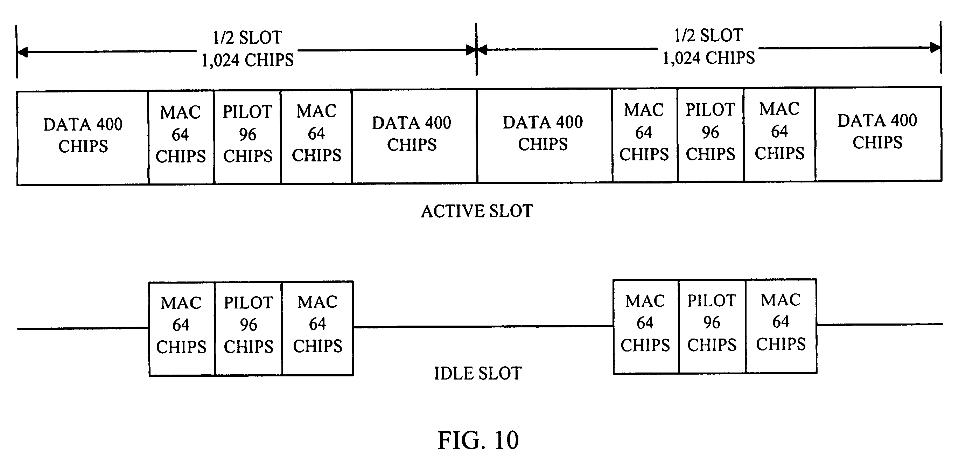

FIG. 10 shows an exemplary forward link slot structure.

A control channel may transmit access-terminal-directed messages at the exemplary rates of 76.8 KBPS or 38.4 KBPS. The control channel modulation characteristics may be the same as those of the forward traffic channel at the corresponding data rate. The control channel transmissions may be distinguished from forward traffic channel transmissions by having a preamble.

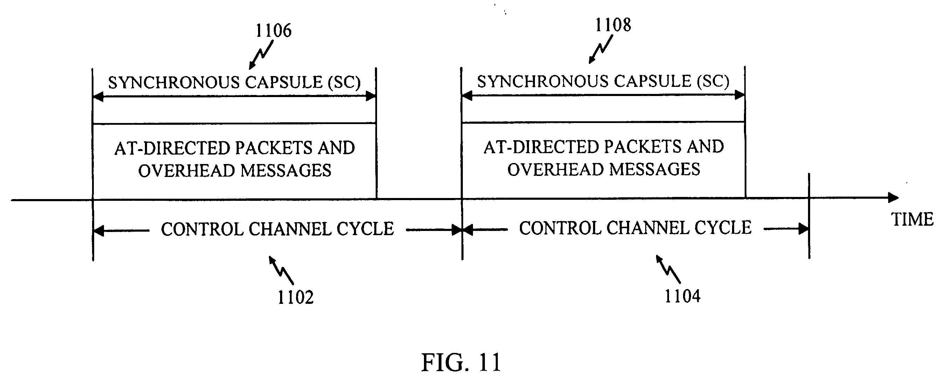

FIG. 11 shows a representation 1100 of a periodic monitoring scheme of a control channel. An access terminal may monitor a control channel at periodic monitoring cycles. A monitoring cycle may include a plurality of CCCs 1102, 1104. In this arrangement, the access terminal may have to stay awake and continuously monitor each SC 1106,1108 for the AT-directed packets and the overhead messages.

Overhead messages may include a QCM and sector parameters. Sector parameters may include unicast parameters, which may be directed to an access terminal, and overhead parameters. Overhead parameters are sent over the control channel to notify an access terminal of important system configuration parameters. These parameters may include system parameters, access parameters, and neighbor lists. The system parameters may include handoff parameters and forward power-control parameters. The access parameters may include reverse power control parameters, access parameters, and access channel parameters. The neighbor lists may include a list of neighboring sectors, which the access terminal may use. The overhead parameters may not need to be updated as frequently as the AT-directed messages. While the unicast parameters may need to be updated frequently, for example in every SC 1106, 1108, the overhead parameters may not need to be updated so frequently.

In a control channel monitoring scheme, as represented by FIG. 11, a mobile station may have to continuously monitor a SC 1106, 1108 transmitted over the control channel even if no new overhead parameters are currently being sent to the base station. This is because the access network may transmit a unicast packet at any point during the transmission of a SC 1106, 1108. This causes the access terminal to use precious battery life for staying awake and receiving redundant overhead parameters that may already have been received and stored.

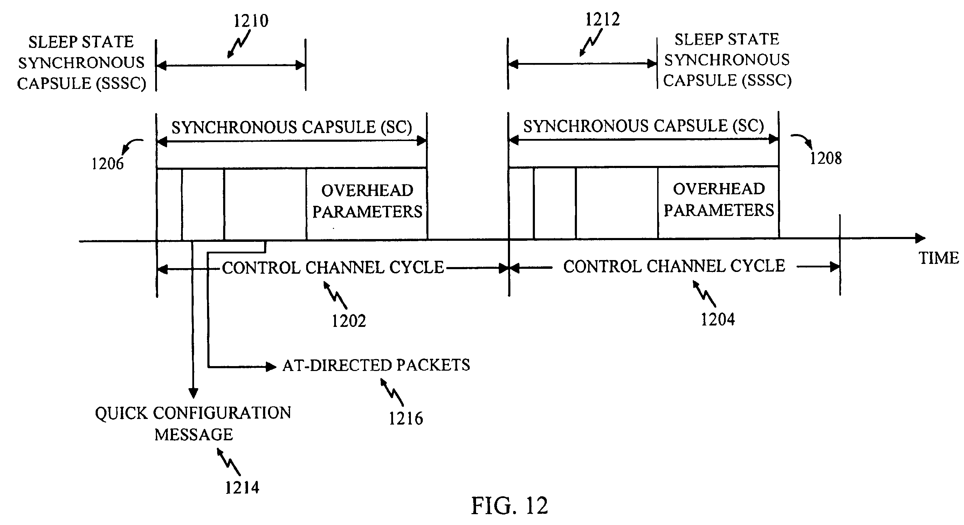

FIG. 12 shows a representation 1200 of a periodic monitoring scheme of a control channel according to one embodiment of the present invention. An access terminal may periodically monitor a control channel at monitoring cycles, which may include one or more CCC intervals 1202, 1204. In one embodiment of the invention, a monitoring cycle may include twelve CCCs, or 5.12 sec. A time interval during which a SC 1206, 1208 is transmitted may include a first time period and a second time period. During the first time period, Sleep State Synchronous Capsule (SSSC) 1210, 1212, an access network may transmit a QCM 1214 and one or more AT-directed packets 1216. An AT-directed packet may include unicast messages and parameters directed to an access terminal. The access network may also transmit a set of overhead parameters, contained in a SC 1206, 1208, during the second time interval. The access network may uniquely link a QCM to its companion set of overhead parameters transmitted in the same SC, for example, by incorporating indicia, such as an overhead signature, in both.

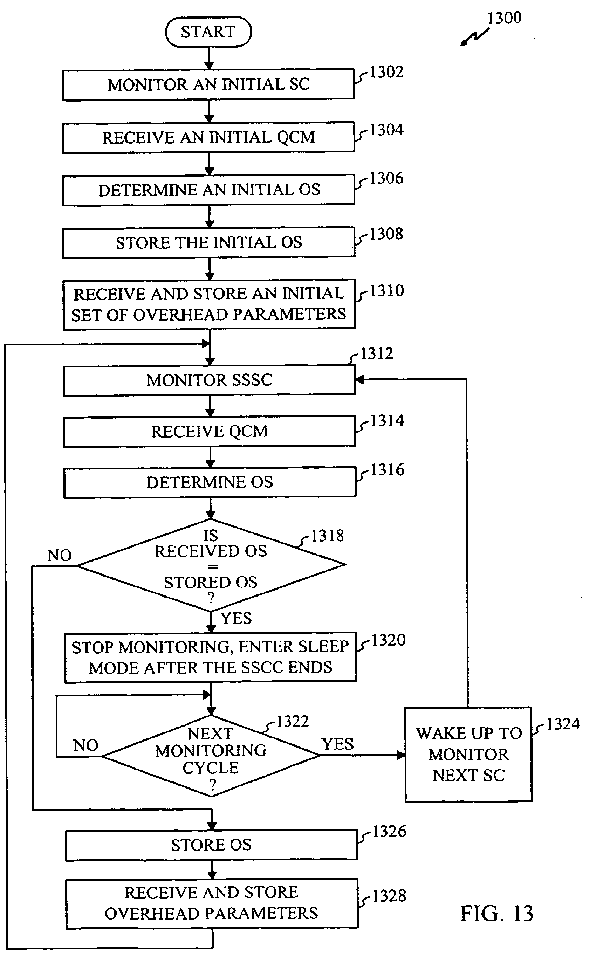

According to one embodiment of the present invention, an access network may transmit the QCM 1214 and the AT-directed packets 1216 during the first time period, separately from the overhead parameters, which are transmitted during the second time period. Therefore, the access terminal may need to monitor only the SSSC 1210, 1212, as described below in connection with FIG. 12 and FIG. 13.

In step 1302 (FIG. 13), when monitoring an initial SC 1206 of a control channel, an access terminal may receive, in step 1304, a QCM 1214 during the initial SSSC 1210. In step 1306, the access terminal may determine an initial overhead signature from the received QCM 1214. In step 1308, the access terminal stores the initial overhead signature. The access terminal may also receive the AT-directed packets 1216 during the same initial SSSC 1210. Subsequently, in step 1310, the access terminal receives and stores an initial set of overhead parameters contained in the same initial SC 1206, which is transmitted during the second time interval. Then, the access terminal may go to sleep or enter standby mode at the end of the initial SC 1206, for the rest of initial CCC time period 1202.

The access terminal may wake up at the beginning of the subsequent CCC 1204 to monitor the subsequent SC 1208. In doing so, the access terminal monitors the SSSC 1212 in step 1312, receives a new QCM in step 1314, and determines an overhead signature therefrom in step 1316. To determine whether the access terminal contains the up-to-date overhead parameters, and thus to avoid monitoring the control channel for a whole SC time period, the access terminal compares its previously saved overhead signature with the currently received overhead signature in step 1318. If these overhead signatures match, the access terminal should contain an up-to-date set of overhead parameters, and thus the access terminal may stop, in step 1320, further monitoring of the control channel. In this case, the access terminal may go to sleep or enter standby mode. According to one embodiment of the present invention, the access terminal may go to sleep state at the end of the current SSSC 1212. The access terminal may stay in the sleep mode until the next monitoring cycle, when the access terminal wakes up, in step 1324 to monitor a subsequent SC, in step 1312

If, however, the currently received overhead signature does not match with the most recently stored overhead signature, the access terminal may not have the most updated overhead parameters, and thus, the access terminal should continue monitoring subsequent SCs until the access terminal successfully receives an up-to-date set of overhead parameters. Therefore, in step 1326, the access terminal stores the current overhead signature, and in step 1328, the access terminal receives and stores the current overhead parameters. The access terminal may continue to monitor the subsequent SCs until it finds a set of overhead parameters that has the same overhead signature as the overhead signature contained in the companion QCM. In this case, the access terminal may go to sleep or enter standby mode after the access terminal has successfully received and stored an up-to-date set of overhead parameters. According to one embodiment of the present invention, the access terminal may go to sleep mode at or before the end of the current SC, which carries an up-to-date set of overhead parameters. In this case, the access terminal may stay in sleep state for the rest of the current monitoring cycle.

According to the one embodiment of the present invention, as described above, separating the transmission of the AT-directed messages from the transmission of the bulk of the overhead parameters in a control channel may allow an access terminal to stop monitoring the control channel at the end of a SSSC. Allowing the access terminal to go to sleep mode sooner, e.g., at the end of a SSSC, advantageously saves more battery life.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor; a Digital Signal Processor (DSP); an Application Specific Integrated Circuit (ASIC); a Field Programmable Gate Array (FPGA), or other programmable logic device; discrete gate or transistor logic; discrete hardware components, or any combination thereof designed to perform the functions described herein. A general-purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in an access terminal. In the alternative, the processor and the storage medium may reside as discrete components in an access terminal.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein, but is to be accorded the widest scope consistent with the principles and novel features disclosed herein.

## Claims

1. A method for monitoring a control channel for a synchronous capsule in a telecommunication system (100) including an access network (102, 104) and an access terminal (106), comprising:
transmitting on said control channel as part of said synchronous capsule, at said access network, a packet (1216) directed to said access terminal, said packet being transmitted during a first time period;
transmitting on said control channel as part of said synchronous capsule, at said access network, a quick configuration message (1214), said quick configuration message being transmitted during said first time period;
transmitting on said control channel as part of said synchronous capsule, at said access network, a set of overhead parameters, said set of overhead parameters being transmitted during a second time period separately from the quick configuration message and said packet; and
monitoring at said access terminal said control channel during said second period of said synchronous capsule based on whether an overhead signature determined from said quick configuration message and a stored overhead signature determined from a previous quick configuration message is the same.

2. The method of claim 1, wherein said message (1214) is linked to said set of overhead parameters.

3. The method of claim 2, wherein said monitoring further includes:
monitoring said control channel only during said first time period if said message (1214) indicates that said set of overhead parameters is up to date.

4. The method of claim 3, further comprising:
said access terminal (106) entering a sleep mode at the end of said first time period if said quick configuration message matches said previous quick configuration message.

5. The method of claim 3, wherein said monitoring step further includes:
monitoring said control channel until said quick configuration message (1214) matches said previous quick configuration message, if said quick configuration message (1214) indicates that said set of overhead parameters is not up to date.

6. A system for monitoring a control channel for a synchronous capsule in a communication system (100), comprising:
an access network configured to transmit on said control channel as part of said synchronous capsule a packet, directed to an access terminal, and a quick configuration message during a first time period, said access network further configured to transmit a set of overhead parameters during a second time period separately from the quick configuration message and said packet; and
an access terminal (106) configured to monitor said control channel during said second period of said synchronous capsule based on whether an overhead signature determined from said quick configuration message and a stored overhead signature determined from a previous quick configuration message is the same.

7. The system of claim 6, wherein said quick configuration message (1214) is linked to said set of overhead parameters.

8. The system of claim 7, wherein said access terminal (106) is further configured to monitor said control channel only during said first time period if said quick configuration message (1214) indicates that said set of overhead parameters is up to date.

9. The system of claim 8, wherein said access terminal (106) is further configured to enter a sleep mode at the end of said first time period if said quick configuration message (1214) matches said previous quick configuration message.

10. The system of claim 8, wherein said access terminal (106) is further configured to monitor said control channel until said quick configuration message (1214) matches said previous message, if said message indicates that said set of overhead parameters is not up to date.

11. An access terminal (106) for monitoring a control channel for a synchronous capsule in a telecommunication system (100), comprising:
means for receiving on said control channel as part of said synchronous capsule a packet directed to said access terminal during a first time period;
means for receiving on said control channel as part of said synchronous capsule a quick configuration message (1214) during said first time period; and
means for monitoring said control channel during a second period of said synchronous capsule to receive a set of overhead parameters based on whether an overhead signature determined from said quick configuration message and a stored overhead signature determined from a previous quick configuration message is the same, wherein the set of overhead parameters is transmitted separately from the quick configuration message and said packet.

12. The access terminal (106) of claim 11, wherein said quick configuration message (1214) is linked to said set of overhead parameters.

13. The access terminal (106) of claim 12, wherein said means for monitoring further includes:
means for monitoring said control channel only during said first time period, if said quick configuration message indicates that said set of overhead parameters is up to date.

14. The access terminal (106) of claim 12, wherein said means for monitoring further includes:
means for entering a sleep mode at the end of said first time period, if said message matches said previous quick configuration message.

15. The access terminal of claim 13, wherein said means for monitoring further includes:
means for monitoring said control channel until said quick configuration message matches said previous quick configuration message, if said quick configuration message indicates that said set of overhead parameters is not up to date.

16. A computer readable medium embodying a method for monitoring a control channel for a synchronous capsule in a telecommunication system, said method comprising:
receiving on said control channel as part of said synchronous capsule a packet directed to an access terminal during a first time period;
receiving on said control channel as part of said synchronous capsule a quick configuration message (1214) during said first time period; and
monitoring said control channel during a second time period of said synchronous capsule to receive a set of overhead parameters based on whether an overhead signature determined from said quick configuration message and a stored overhead signature determined from a previous quick configuration message is the same, wherein the set of overhead parameters is transmitted separately from the quick configuration message and said packet.

17. The computer readable medium of claim 16, wherein said quick configuration message (1214) is linked to said set of overhead parameters.

18. The computer readable medium of claim 17 wherein said monitoring further includes:
monitoring said control channel only during said first time period, if said quick configuration message (1214) indicates that said set of overhead parameters is up to date.

19. The computer readable medium of claim 18 further embodying:
entering a sleep mode at the end of said first time period, if said quick configuration message (1214) matches said previous quick configuration message.

20. The computer readable medium of claim 18 wherein said monitoring further includes:
monitoring said control channel until said quick configuration message matches said previous quick configuration message, if said quick configuration message indicates that said set of overhead parameters is not up to date.

21. An access network for transmitting control channel information including a synchronous capsule in a telecommunication system, comprising:
means for transmitting on said control channel as part of said synchronous capsule a packet directed to an access terminal (106) during a first time period;
means for transmitting on said control channel as part of said synchronous capsule a quick configuration message (1214) during said first time period; and
means for transmitting on said control channel as part of said synchronous capsule a set of overhead parameters during a second time period separately from the quick configuration message and said packet.

22. The system of claim 21, wherein said quick configuration message is linked to said set of overhead parameters.

## Patentansprüche

1. Ein Verfahren zum Überwachen eines Steuerkanals hinsichtlich einer synchronen Kapsel in einem Telekommunikationssystem (100), das ein Zugriffsnetzwerk (102, 104) und ein Zugriffsendgerät (106) beinhaltet, das Folgendes aufweist:
Senden, auf dem Steuerkanal als Teil der synchronen Kapsel, an dem Zugriffsnetzwerk, eines Pakets (1216), das an das Zugriffsendgerät gerichtet ist, wobei das Paket während einer ersten Zeitperiode gesendet wird;
Senden, auf dem Steuerkanal als Teil der synchronen Kapsel, an dem Zugriffsnetzwerk, einer Schnellkonfigurationsnachricht (1214), wobei die Schnellkonfigurationsnachricht während der ersten Zeitperiode gesendet wird;
Senden, auf dem Steuerkanal als Teil der synchronen Kapsel, an dem Zugriffsnetzwerk, eines Satzes von Overhead-Parametern, wobei der Satz von Overhead-Parametern während einer zweiten Zeitperiode separat von der Schnellkonfigurationsnachricht und dem Paket gesendet wird; und
Überwachen, an dem Zugriffsendgerät, des Steuerkanals während der zweiten Periode der synchronen Kapsel, basierend darauf, ob eine Overhead-Signatur, die aus der Schnellkonfigurationsnachricht bestimmt wurde, und eine gespeicherte Overhead-Signatur, die aus einer früheren Schnellkonfigurationsnachricht bestimmt wurde, die gleiche ist.

2. Verfahren nach Anspruch 1, wobei die Nachricht (1214) mit dem Satz von Overhead-Parametern verbunden ist.

3. Verfahren nach Anspruch 2, wobei das Überwachen Folgendes beinhaltet:
Überwachen des Steuerkanals nur während der ersten Zeitperiode, wenn die Nachricht (1214) anzeigt, dass der Satz von Overhead-Parametern aktuell ist.

4. Verfahren nach Anspruch 3, das weiter Folgendes aufweist:
das Zugriffsendgerät (106) tritt in einen Ruhemodus am Ende der ersten Zeitperiode ein, wenn die Schnellkonfigurationsnachricht mit einer vorherigen Schnellkonfigurationsnachricht übereinstimmt.

5. Verfahren nach Anspruch 3, wobei der Überwachungsschritt weiter Folgendes beinhaltet: Überwachen des Steuerkanals, bis die Schnellkonfigurationsnachricht (1214) mit der vorherigen Schnellkonfigurationsnachricht übereinstimmt, wenn die Schnellkonfigurationsnachricht (1214) anzeigt, dass der Satz von Overhead-Parametern nicht aktuell ist.

6. Ein System zum Überwachen eines Steuerkanals hinsichtlich einer synchronen Kapsel in einem Kommunikationssystem (100), das Folgendes aufweist:
ein Zugriffsnetzwerk, das konfiguriert ist zum Senden, auf dem Steuerkanal als Teil der synchronen Kapsel, eines Pakets, das an ein Zugriffsendgerät gerichtet ist, und einer Schnellkonfigurationsnachricht, während einer ersten Zeitperiode, wobei das Zugriffsnetzwerk weiter konfiguriert ist zum Senden eines Satzes von Overhead-Parametern während einer zweiten Zeitperiode separat von der Schnellkonfigurationsnachricht und dem Paket; und
ein Zugriffsendgerät (106), das konfiguriert ist zum Überwachen des Steuerkanals während der zweiten Periode der synchronen Kapsel basierend darauf, ob eine Overhead-Signatur, die aus der Schnellkonfigurationsnachricht bestimmt wird, und eine gespeicherte Overhead-Signatur, die aus einer vorherigen Schnellkonfigurationsnachricht bestimmt wird, die gleiche sind.

7. System nach Anspruch 6, wobei die Schnellkonfigurationsnachricht (1214) mit dem Satz von Overhead-Parametern verbunden ist.

8. System nach Anspruch 7, wobei das Zugriffsendgerät (106) weiter konfiguriert ist zum Überwachen des Steuerkanals nur während der ersten Zeitperiode, wenn die Schnellkonfigurationsnachricht (1214) anzeigt, dass der Satz von Overhead-Parametern aktuell ist.

9. System nach Anspruch 8, wobei das Zugriffsendgerät (106) weiter konfiguriert ist, in einen Schlafmodus am Ende der ersten Zeitperiode einzutreten, wenn die Schnellkonfigurationsnachricht (1214) mit der vorherigen Schnellkonfigurationsnachricht übereinstimmt.

10. System nach Anspruch 8, wobei das Zugriffsendgerät (106) weiter konfiguriert ist zum Überwachen des Steuerkanals, bis die Schnellkonfigurationsnachricht (1214) mit der vorherigen Nachricht übereinstimmt, wenn die Nachricht anzeigt, dass der Satz von Overhead-Parametern nicht aktuell ist.

11. Ein Zugriffsendgerät (106) zum Überwachen eines Steuerkanals hinsichtlich einer synchronen Kapsel in einem Telekommunikationssystem (100), das Folgendes aufweist:
Mittel zum Empfangen, auf dem Steuerkanal als Teil der synchronen Kapsel, eines Pakets, das an das Zugriffsendgerät gerichtet ist, während einer ersten Zeitperiode;
Mittel zum Empfangen, auf dem Steuerkanal als Teil der synchronen Kapsel, einer Schnellkonfigurationsnachricht (1214) während der ersten Zeitperiode; und
Mittel zum Überwachen des Steuerkanals während einer zweiten Periode der synchronen Kapsel zum Empfangen eines Satzes von Overhead-Parametern basierend darauf, ob eine Overhead-Signatur, die aus der Schnellkonfigurationsnachricht bestimmt wird, und eine gespeicherte Overhead-Signatur, die aus einer vorherigen Schnellkonfigurationsnachricht bestimmt wird, die gleiche sind, wobei der Satz von Overhead-Parametern separat von der Schnellkonfigurationsnachricht und dem Paket gesendet wird.

12. Zugriffsendgerät (106) nach Anspruch 11, wobei die Schnellkonfigurationsnachricht (1214) mit dem Satz von Overhead-Parametern verbunden ist.

13. Zugriffsendgerät (106) nach Anspruch 12, wobei die Mittel zum Überwachen weiter Folgendes beinhalten:
Mittel zum Überwachen des Steuerkanals nur während der ersten Zeitperiode, wenn die Schnellkonfigurationsnachricht anzeigt, dass der Satz von Overhead-Parametern aktuell ist.

14. Zugriffsendgerät (106) nach Anspruch 12, wobei die Mittel zum Überwachen weiter Folgendes beinhalten:
Mittel zum Eintreten in einen Ruhemodus am Ende der ersten Zeitperiode, wenn die Nachricht mit der vorherigen Schnellkonfigurationsnachricht übereinstimmt.

15. Zugriffsendgerät nach Anspruch 13, wobei die Mittel zum Überwachen weiter Folgendes beinhalten:
Mittel zum Überwachen des Steuerkanals, bis die Schnellkonfigurationsnachricht mit der vorherigen Schnellkonfigurationsnachricht übereinstimmt, wenn die Schnellkonfigurationsnachricht anzeigt, dass der Satz von Overhead-Parametern nicht aktuell ist.

16. Ein computerlesbares Medium, das ein Verfahren zum Überwachen eines Steuerkanals hinsichtlich einer synchronen Kapsel in einem Telekommunikationssystem verkörpert, wobei das Verfahren Folgendes aufweist:
Empfangen, auf dem Steuerkanal als Teil der synchronen Kapsel, eines Pakets, das an ein Zugriffsendgerät gerichtet ist, während einer ersten Zeitperiode;
Empfangen, auf dem Steuerkanal als Teil der synchronen Kapsel, einer Schnellkonfigurationsnachricht (1214) während der ersten Zeitperiode; und
Überwachen des Steuerkanals während einer zweiten Zeitperiode der synchronen Kapsel zum Empfangen eines Satzes von Overhead-Parametern basierend darauf, ob eine Overhead-Signatur, die aus der Schnellkonfigurationsnachricht bestimmt wird, und eine gespeicherte Overhead-Signatur, die aus einer vorherigen Schnellkonfigurationsnachricht bestimmt wird, die gleiche sind, wobei der Satz von Overhead-Parametern separat von der Schnellkonfigurationsnachricht und dem Paket gesendet wird.

17. Computerlesbares Medium nach Anspruch 16, wobei die Schnellkonfigurationsnachricht (1214) mit dem Satz von Overhead-Parametern verbunden ist.

18. Computerlesbares Medium nach Anspruch 17, wobei das Überwachen weiter Folgendes beinhaltet:
Überwachen des Steuerkanals nur während der ersten Zeitperiode, wenn die Schnellkonfigurationsnachricht (1214) anzeigt, dass der Satz von Overhead-Parametern aktuell ist.

19. Computerlesbares Medium nach Anspruch 18, das weiter Folgendes verkörpert:
Eintreten in einen Ruhemodus am Ende der ersten Zeitperiode, wenn die Schnellkonfigurationsnachricht (1214) mit der vorherigen Schnellkonfigurationsnachricht übereinstimmt.

20. Computerlesbares Medium nach Anspruch 18, wobei das Überwachen weiter Folgendes beinhaltet:
Überwachen des Steuerkanals, bis die Schnellkonfigurationsnachricht mit der vorherigen Schnellkonfigurationsnachricht übereinstimmt, wenn die Schnellkonfigurationsnachricht anzeigt, dass der Satz von Overhead-Parametern nicht aktuell ist.

21. Ein Zugriffsnetzwerk zum Senden von Steuerkanalinformation, die eine synchrone Kapsel beinhaltet, in einem Telekommunikationssystem, das Folgendes aufweist:
Mittel zum Senden, auf dem Steuerkanal als Teil der synchronen Kapsel, eines Pakets, das an ein Zugriffsendgerät (106) gerichtet ist, während einer ersten Zeitperiode;56
Mittel zum Senden, auf dem Steuerkanal als Teil der synchronen Kapsel, einer Schnellkonfigurationsnachricht (1214) während der ersten Zeitperiode; und
Mittel zum Senden, auf dem Steuerkanal als Teil der synchronen Kapsel, eines Satzes von Overhead-Parametern während einer zweiten Zeitperiode, und zwar separat von der Schnellkonfigurationsnachricht und dem Paket.

22. System nach Anspruch 21, wobei die Schnellkonfigurationsnachricht mit dem Satz von Overhead-Parametern verbunden ist.

## Revendications

1. Procédé de surveillance d'un canal de commande pour une capsule synchrone dans un système de télécommunication (100) incluant un réseau d'accès (102, 104) et un terminal d'accès (106), comprenant :
émettre sur le canal de commande en tant que partie de la capsule synchrone, au niveau du réseau d'accès, un paquet (1216) dirigé vers le terminal d'accès, le paquet étant émis pendant une première durée ;
émettre sur le canal de commande en tant que partie de la capsule synchrone, au niveau du réseau d'accès, un message de configuration rapide (1214), le message de configuration rapide étant émis pendant la première durée ;
émettre sur le canal de commande en tant que partie de la capsule synchrone, au niveau du réseau d'accès, un ensemble de paramètres de supervision, cet ensemble de paramètres de supervision étant émis pendant une seconde durée séparément du message de configuration rapide et du paquet ; et
surveiller au niveau du canal d'accès le canal de commande pendant la seconde période de la capsule synchrone selon qu'une signature de supervision déterminée à partir du message de configuration rapide et une signature de supervision mémorisée déterminée à partir d'un message de configuration rapide précédent sont identiques.

2. Procédé selon la revendication 1, dans lequel le message (1214) est lié à l'ensemble de paramètres de supervision.

3. Procédé selon la revendication 2, dans lequel la surveillance comprend en outre la surveillance du canal de commande seulement pendant la première durée si le message (1214) indique que l'ensemble de paramètres de supervision est à jour.

4. Procédé selon la revendication 3, comprenant en outre : l'entrée du terminal d'accès (106) dans un mode de sommeil à la fin de la première durée si le message de configuration rapide concorde avec le message de configuration rapide précédent.

5. Procédé selon la revendication 3, dans lequel l'étape de surveillance comprend en outre : surveiller le canal de commande jusqu'à ce que le message de configuration rapide (1214) concorde avec le message de configuration rapide précédent, si le message de configuration rapide (1214) indique que l'ensemble de paramètres de supervision n'est pas à jour.

6. Système de surveillance d'un canal de commande pour une capsule synchrone dans un système de communication (100) comprenant :
un réseau d'accès agencé pour émettre sur le canal de commande en tant que partie de la capsule synchrone un paquet, dirigé vers le terminal d'accès, et un message de configuration rapide pendant une première durée, le réseau d'accès étant agencé pour transmettre un ensemble de paramètres de supervision pendant une seconde durée séparément du message de configuration rapide et du paquet ; et
un terminal d'accès (106) agencé pour surveiller le canal de commande pendant la seconde durée de la capsule synchrone sur la base du fait que la signature de supervision déterminée à partir du message de configuration rapide et une signature de supervision mémorisée déterminée à partir d'un message de configuration rapide précédent sont identiques.

7. Système selon la revendication 6, dans lequel le message de configuration rapide (1214) est lié à un ensemble de paramètres de supervision.

8. Système selon la revendication 7, dans lequel le terminal d'accès (106) est en outre agencé pour surveiller le canal de commande seulement pendant la première durée si le message de configuration rapide (1214) indique que les paramètres de supervision sont à jour.

9. Système selon la revendication 8, dans lequel le terminal d'accès (106) est en outre agencé pour entrer dans un mode de sommeil à la fin de la première durée si le message de configuration rapide (1214) concorde avec le message de configuration rapide précédent.

10. Système selon la revendication 8, dans lequel le terminal d'accès (106) est en outre agencé pour surveiller le canal de commande jusqu'à ce que le message de configuration rapide (1214) concorde avec le message précédent, si le message indique que l'ensemble de paramètres de supervision n'est pas à jour.

11. Terminal d'accès (106) pour surveiller un canal de commande pour une capsule synchrone dans un système de communication (100), comprenant :
des moyens pour recevoir sur le canal de commande en tant que partie de la capsule synchrone un paquet dirigé vers le terminal d'accès pendant une première durée ;
des moyens pour recevoir sur le canal de commande en tant que partie de la capsule synchrone un message de configuration rapide (1214) pendant la première durée ; et
des moyens pour surveiller le canal de commande pendant une seconde durée de la capsule synchrone pour recevoir un ensemble de paramètres de supervision sur la base de ce qu'une signature de supervision déterminée pour le message de configuration rapide et une signature de supervision mémorisée déterminée à partir d'un message de configuration rapide précédent sont identiques, dans lequel l'ensemble de paramètres de supervision est transmis séparément du message de configuration rapide et du paquet.

12. Terminal d'accès (106) selon la revendication 11, dans lequel le message de configuration rapide (1214) est lié à un ensemble de paramètres de supervision.

13. Terminal d'accès (106) selon la revendication 12, dans lequel les moyens de surveillance comprennent en outre des moyens pour surveiller le canal de commande seulement pendant la première durée si le message de configuration rapide indique que l'ensemble de paramètres de supervision est à jour.

14. Terminal d'accès (106) selon la revendication 12, dans lequel les moyens de surveillance comprennent en outre des moyens pour entrer dans un mode de sommeil à la fin de la première durée si le message concorde avec le message de configuration rapide précédent.

15. Terminal d'accès (106) selon la revendication 13, dans lequel les moyens de surveillance comprennent en outre des moyens pour surveiller le canal de commande jusqu'à ce que le message de configuration rapide concorde avec le message de configuration rapide précédent si le message de configuration rapide indique que l'ensemble de paramètres de supervision n'est pas à jour.

16. Milieu lisible par ordinateur mettant en oeuvre un procédé pour surveiller un canal de commande pour une capsule synchrone dans un système de télécommunication, ce procédé comprenant :
recevoir sur le canal de commande en tant que partie de la capsule synchrone un paquet dirigé vers un terminal d'accès pendant une première durée ;
recevoir sur le canal de commande en tant que partie de la capsule synchrone un message de configuration rapide (1214) pendant la première durée ; et
surveiller le canal de commande pendant une seconde durée de la capsule synchrone pour recevoir un ensemble de paramètres de supervision sur la base de ce qu'une signature de supervision déterminée pour le message de configuration rapide et une signature de supervision mémorisée déterminée à partir d'un message de configuration rapide précédent sont identiques, dans lequel l'ensemble de paramètres de supervision est transmis séparément du message de configuration rapide et du paquet.

17. Milieu lisible par ordinateur selon la revendication 16, dans lequel le message de configuration rapide (1214) est lié à un ensemble de paramètres de supervision.

18. Milieu lisible par ordinateur selon la revendication 17, dans lequel la surveillance comprend en outre :
surveiller le canal de commande seulement pendant la première durée, si le message de configuration rapide (1214) indique que l'ensemble de paramètres de supervision est à jour.

19. Milieu lisible par ordinateur selon la revendication 18, dans lequel la surveillance comprend en outre : entrer dans un mode de sommeil à la fin de la première durée si le message de configuration rapide (1214) concorde avec le message de configuration rapide précédent.

20. Milieu lisible par ordinateur selon la revendication 18, dans lequel la surveillance comprend en outre :
surveiller le canal de commande jusqu'à ce que le message de configuration rapide concorde avec le message de configuration rapide précédent, si le message de configuration rapide indique que l'ensemble de paramètres de supervision n'est pas à jour.

21. Réseau d'accès pour transmettre des informations de canal de commande incluant une capsule synchrone dans un système de télécommunication, comprenant :
des moyens pour émettre sur le canal de commande en tant que partie de la capsule synchrone un paquet dirigé vers un terminal d'accès (106) pendant une première durée ;
des moyens pour émettre sur le canal de commande en tant que partie de la capsule synchrone un message de configuration rapide (1214) pendant la première durée ; et
des moyens pour émettre sur le canal de commande en tant que partie de la capsule synchrone un ensemble de paramètres de supervision, pendant une seconde durée séparément du message de configuration rapide et du paquet.

22. Système selon la revendication 21, dans lequel le message de configuration rapide est lié à l'ensemble de paramètres de supervision.
